# EUROPEAN PATENT APPLICATION

(11) **EP 4 550 237 A1**
(43) Date of publication of application: **07.05.2025**
(21) Application number: 23383130.4
(22) Date of filing: 06.11.2023
(51) Int. Cl.: G06Q 10/087

(54) **SUPERVISED AGGREGATION SYSTEM AND METHOD FOR PREPARING AN AGGREGATION WHICH USES THE SAME**

(71) Applicant: Grifols Worldwide Operations Limited, Dublin 22 (IE)
(72) Inventor: GARCÍA SÁNCHEZ, Manuel, Clondalkin, Dublin 22 (IE); BELLONCH ORENES, Carles, Clondalkin, Dublin 22 (IE); ALCANTARILLA MUÑOZ, Gregorio, Clondalkin, Dublin 22 (IE); BARCKHAHN DELPIANO, Karen, Clondalkin, Dublin 22 (IE); MIR PUYUELO, Joan, Clondalkin, Dublin 22 (IE); RODRÍGUEZ JURADO, David, Clondalkin, Dublin 22 (IE); DE LA CRUZ GALAN, Alejandro, Clondalkin, Dublin 22 (IE); TWOSE GARÇON, Luis, Clondalkin, Dublin 22 (IE)
(74) Representative: ABG Intellectual Property Law, S.L.

(57) **Abstract**

The present invention relates to a supervised aggregation system and to a method to create aggregations of units by using said supervised aggregation system. The system is based on RFID tags and it is particularly useful in health industry, for managing stocks of medicine products.

## Description

### OBJECT OF THE INVENTION

The present invention relates to a supervised aggregation system, particularly useful in health industries, and a corresponding method to prepare aggregations of storage units, particularly whole blood units, plasma units or blood-derived product units, among others. This invention is related to logistics, health, and biotechnology.

### BACKGROUND OF THE INVENTION

GS1 logistic labels are machine readable alphanumeric codes that are often applied around the word in supply chain standards. These labels allow users to identify logistic items uniquely so that they can be tracked and traced throughout the supply chain. GS1 only requires that each logistic unit must be identified with a unique serial number, the Serial Shipping Container Code (SSCC). Also, GS1 provides additional fields in the label to include additional information.

Scanning the SSCC on each logistic item allows to individually identify them and provides the opportunity to implement a wide range of applications such as cross docking, shipment routing, and automated receiving of the items in a certain destination.

RFID (Radio Frequency Identification) tags are a simple and cost-effective way to identify an item so that it can be wirelessly detected, ensuring traceability. An RFID tag is a small, intelligent device that stores data and can transmit it through radio-frequency (RF) signals. The information and traceability it sends about an item can be quickly and automatically captured by a RFID reader. Despite their small size, they can encode a large amount of information about an item throughout the supply chain. Their data storage capacity allows the item they reference to be traced from an origin to a destination, thanks to radio frequency. These tags help with stock management.

There exist several types of RFID tags, such as the ones that operate in HF (High Frequency) in LF (Low Frequency, between 120-140 KHz), in UHF (Ultra High Frequency), or via NFC (Near Field Communication).

Although the aforementioned techniques are well-known, there is a need to provide an enhanced system to face the problem of distributing non-certified items by mistake, as well as avoiding any problem caused by the lack of traceability of said items.

### BRIEF DESCRIPTION OF THE INVENTION

The present invention proposes a solution to the preceding problems providing a supervised aggregation system according to claim 1, a supervised aggregation management system according to claim 11 and a method for creating an aggregation by using the supervised aggregation system, according to claim 12. The dependent claims define preferred embodiments of the invention.

The present invention relates to a supervised aggregation system and to a method to create aggregations of storage units by using said supervised aggregation system. The system is based on RFID tags and it is particularly useful in health industry, for managing stocks of medicine products.

In the scope of the present invention, the "storage units" (from now on also referred to as simply "units") will be understood as units of a certain product to be aggregated. In preferred embodiments, the storage units refer to whole blood and blood derivates products storage units, like whole blood units, plasma units, or the like. The storage units may be embodied as bags, flasks, vials, bottles or other storage formats.

In a first inventive aspect, the invention provides a *supervised aggregation system, suitable for assisting a user when creating an aggregation of units and storing said aggregation in a container, the system comprising:*
- *a computer means;*
- *at least a reader communicated with the computer means, the reader being configured to read one or more RFID tags and*/*or to read unique identifiers of the units;*
- *a scale communicated with the computer means and configured to continuously weighting the container;*
- *a RFID printer communicated with the computer means; the RFID printer being configured to encode and to print one or more RFID tags, the one or more RFID tags comprising data to identify the container upon request of the computer means; the RFID tags being adapted to be attached to the container;*
*and wherein the computer means are configured for validating the aggregation of the unit by monitoring the weight of the container after adding each unit.*

In this way, the invention weights the container continuously and detects each time a new unit is added to the aggregation.

In the scope of the present invention, "validating" an aggregation implies that the content of said aggregation is verified by monitoring at least its weight. In preferred embodiments, the validation further comprises verifying the type of product, the completeness or other administrative information of the availability and other characteristics of said product.

Advantageously, the supervised aggregation system is provided with the weight of the container (with and without the lid), as well as the weight of each of the units to be aggregated. The scale continuously monitors the weight of the weight with each unit that is aggregated to the container. Successive measurements of the weight as long as a new unit is aggregated provides enhanced accuracy. In this way, the invention takes into account differential weight measurements with each new unit deposited into the container, and the total weight can be tracked real time with high accuracy.

The supervised aggregation system comprises computer means, which in turn preferably comprises a (touch)screen and a processor which runs a software program that guides the user and communicates with the management module of the destination, as well as a reader, a scale and an RFID-enabled label printer.

In preferred embodiments of the invention, the at least one reader of the supervised aggregation system comprises a first reader configured for reading the unique identifiers (e.g., barcodes) of the individual units, and a second reader for reading the RFID tags or barcodes (e.g., GS1 128 barcode) of the container. The first reader is configured with regular expressions to identify the unique identifier of the units, and for outputting a bit value depending on whether the units are read appropriately (bit value '1') or not (bit value '0').

In an even more preferred embodiment, the second reader is wireless.

By connecting the supervised aggregation system to the computer management module of the destination, the weight and status of the unit is obtained and by comparing the weight indicated by the management module for that unit with the weight of the unit measured by the scale, the unit can be determined as suitable for the aggregation (if the weight matches with the expected one). During the aggregation process, the weight is monitored, and a warning is communicated if it unexpectedly changes. At the end of the unit aggregation, a RFID tag/label with the aggregation data is printed and encoded.

In an embodiment, the computer means are a laptop, a tablet or equivalent means with network connection and a screen to allow the interaction of the user with the supervised aggregation system. The invention comprises a label/tag printer with RFID encoding.

As aforementioned, the invention takes advantage of a two-level identification of the units in the container: firstly, a unique identifier for each of the units; secondly, a RFID tag which is attached to the container and that allows the identification of all the units stored (aggregated) in said container.

The units carry on a certain identifier, preferably a barcode. Said units are aggregated into a container (e.g., a cardboard box).

In a preferred embodiment, the supervised aggregation system further comprises a cleaning device to remove frost from the units.

Advantageously, in this embodiment the supervised aggregation system further comprises a cleaning device to be used on the tag prior to the reading. In this way, frost of the unique identifier of the unit is removed. In some preferred embodiments, the cleaning device can be a sponge, and the material of the frost removal sponge is preferably cross-linked polyethylene foam.

In a preferred embodiment of the supervised aggregation system, *the RFID tags are configured to operate in UHF band.*

In this embodiment, the RFID tags printed by the RFID printer are UHF (Ultra High Frequency) RFID tags, which allows to read tags massively and at a moderate distance. Advantageously, with this technology it is possible to detect RFID tags at a distance up to 15 m, which simplifies the management of the inventory. Also, these UHF RFID tags can be passive, thus they can be read with a RFID reader that provides them the energy so that the UHF RFID tags can communicated and emit the information about the unique identifier they encode.

In a preferred embodiment of the supervised aggregation system, *the computer means is configured to exchange messages with a computer management module to verify the units of the aggregation. More preferably, the messages are HL7 messages.*

HL7 standard focus on the application layer in the Open Systems Interconnection (OSI) model, and it is suitable for the transfer of clinical and administrative health data. In this embodiment, the supervised aggregation system of the invention can be deployed in a first facility (origin), while the computer management module can be a software or control means in a destination facility. The exchange of messages between origin and destination provide a reliable traceability of the aggregated units that will be delivered to the destination.

In a preferred embodiment of the supervised aggregation system, *the supervised aggregation system according to any of the preceding claims, wherein each of the units* of a *container is identified by a unique identifier, the unique identifier preferably being a barcode, and wherein said unique identifier being readable by the reader.*

In a preferred embodiment of the supervised aggregation system, *the reader is configured to read barcodes and RFID tags.*

In a preferred embodiment of the supervised aggregation system, *the data of the RFID tag comprises, at least:*
- *an optically identifiable field; and*
- *a radiofrequency-based field.*

Data encoded and printed in the RFID tag provides identification of each container content. The optically identifiable field can be for instance, a barcode or other identifier that can be readable by a human or optical means (a barcode scanner, etc.). The radiofrequency (RF)-based field encodes the identifier information using RF.

In a more preferred embodiment of the supervised aggregation system, *the optically identifiable field of the RFID tag comprises:*
- a *GS1 128 aggregation barcode, which is configured* as a *serial Shipping Container Code,* SSCC; *and*
- a *GSI tag encoding the* SSCC *in hexadecimal format.*

In an even more preferred embodiment of the supervised aggregation system, *the radiofrequency-based field comprises a GS1 Data matrix code with an identification of each aggregated unit.*

Advantageously, the hexadecimal formal allows to optimize the memory of the RFID tag, as it requires less characters to encode the unique identifier of each container.

*In another embodiment of the supervised aggregation system, the RFID tag printed by the RFID printer is configured* as a *temperature sensor.*

Advantageously, in this embodiment the temperature of the container during their delivery to a destination can be tracked.

In some embodiments of the invention, *the units comprise whole blood or blood derivates.* For instance, the units are blood products storage units, like whole blood units, plasma units and/or other blood derivates. In an even more preferred embodiment, the units are refrigerated medical items or other medicinal products.

In a preferred embodiment, *the computer means is configured for:*
- *receiving data about the aggregation to be performed from a management module;*
- *sending to the management module a query to gather the weight of the unit to be added to the container;*
- *for each unit to be aggregated according to the data, waiting an input from the user validating that the unit has been added to the container;*
- *checking the weight of the container after the unit has been added by means of the scale and compare said weight of the container with a previous weight gathered from the management system;*
- *once the number of user inputs reaches the amount of units in the aggregation, sending to the management module an acknowledgment confirming all the units of the aggregation.*

In even more preferred embodiments, for each input of the user not only the weight of the container is checked after the aggregation of each unit, but also other parameters related to other characteristics (completeness or product type, among others). In this way, the supervised aggregation system is able to detect mismatch between the expected weight of the units and the real one measured by the scale after each unit addition to the aggregation.

In an embodiment, the supervised aggregation system is connected to a user authentication module.

In a second inventive aspect, the invention comprises a *supervised aggregation management system comprising:*
- *the supervised aggregation system according to any of the preceding claims; and*
- *a management module;*
*wherein the supervised aggregation system and the management module are communicably coupled to exchange messages.*

Preferably, the messages are HL7 messages.

In a third inventive aspect, the invention comprises a *method for creating an aggregation of units in a container by assisting a user with the supervised aggregation system according to any of the preceding claims, the method comprising the following steps:*
- *inputting in the supervised aggregation system, by means of the computer means, data about the aggregation to be performed; said data comprising the amount of units for the aggregation;*
- *placing an empty container onto the scale and performing taring* of *said container;*
- *requesting the user to proceed with the aggregation, and for each unit to be added to the container:*
   ∘ *reading a unique identifier of the unit with the reader;*
   ∘ *requesting the user to add the unit in the container;*
   ∘ *validating the aggregation of the unit by monitoring the weight of the container after adding the unit;*
- *once all the units to be aggregated are added to the container, requesting the user to finish the aggregation by:*
   ∘ *closing the container with a lid,*
   ∘ *encoding and printing a RFID tag which identifies the aggregation by using the RFID printer, and*
   ∘ *attaching the RFID tag to the container.*

An amount of units to be included in the aggregation can be inputted in the supervised aggregation system once all the units to be aggregated are added to the container (that is, when the amount of total units of the aggregation is reached), or before starting the aggregation of units.

In the invention, the RFID printer performs two operations: encode the RFID tag by transferring to RFID tag memory the unique identifier, as well as to print the RFID tag.

In a preferred embodiment, after attaching the RFID tag to the container, the user reads the RFID tag by using the reader as a further inspection of the tag.

In another embodiment, the method further comprises *using a user authentication module to authorize the user to perform the aggregation.*

The data about the aggregation to be performed comprises information about the product type, the unique identifiers (barcodes) assigned to the units, and other administrative data that allows tracking the units.

The units are identified by unique identifiers (like barcodes), whereas the aggregation is identified by the RFID tag. The encoding embedded in the RFID tag identifies, as a whole, all the barcodes of the aggregation.

The operation of the user by using the supervised aggregation system of the invention is summarized as follows:
a) Proceeding with user identification and authorization of said user for logging in the supervised aggregation system. All the operations performed after the login operation will be associated to that user, until a logoff takes place.
b) Informing the supervised aggregation system of data about the aggregation to be made.
c) Placing the empty container onto the scale and perform taring of the container. Precise taring of the container allows to monitor more precisely the weight of the units stored therein.
d) Beginning aggregation procedure.
e) Detecting and reading unit ID (n times) → for each one, placing the unit in the container.
f) Indicating to the supervised aggregation system the amount of total aggregated units (n) in the container.
g) Finishing the aggregation process, closing the container and attaching the RFID tag to the container. Then, an informative report indicating that the aggregation has concluded successfully is obtained from the computer means of the supervised aggregation system.

In parallel to the previous operations, and depending on the user input and other events triggered by weight variation detected by the scale, the supervised aggregation system performs the following tasks:
- Reporting on the process and unique identifier(s) and requests the user to leave in the container certain unit(s) or deny aggregation.
- Reporting the weight and the aggregation or disaggregation.
- Requesting the user to close the container and print RFID labels.

Along the operation with the supervised aggregation system the user is guided through the screen of the system, which displays a graphical interface with multiple screens which are convenient and easy-to-use. Said graphical interface prompts in a screen the progress of the aggregation, including the amount of units registered, their corresponding weight and a barcode or unique identifier. Also, the user is allowed to interact by means of the screen with the computer means of the invention, to inform the supervised aggregation system of the required inputs. The user may also scan barcodes by using the reader of the invention.

Multiple containers are prepared as previously described and then they are sorted in pallets, for their storing and subsequent transport to the destination.

The supervised aggregation system continuously monitors the weight of the aggregation by means of the scale, and it checks whether a sudden or non-scheduled weight variation occurs. In those cases, the system outputs a warning message.

Throughout the supervised aggregation system operation, it stores all the information of the operations (like aggregations or disaggregation) carried out, identifies the user who carries them out, and monitors them (time, possible errors occurred during the aggregation/disaggregation process, etc.).

Each time a new unit is added to the aggregation, the screen of the supervised aggregation system shows the weight of the aggregation so far, as well as the amount of products/units introduced in the container, each unit being identified by a barcode.

In a preferred embodiment of the method of the invention, *the computer means is further configured to allow disaggregation and*/*or aggregation of units from the container, and wherein the computer means is configured to request the user which unit(s) are to be disaggregated and*/*or aggregated, and to monitor the disaggregation and*/*or aggregation of units by means of weight variation measured by the scale.*

Advantageously, the supervised aggregation system allows a scheduled disaggregation by requiring to the user which unit(s) need to be disaggregated, and then verifying the weight and number of units included in the aggregation before and after the disaggregation operation. Also, the user may indicate the barcode of the unit to be disaggregated, and the supervised aggregation system validates that operation by checking that the weight variation corresponds to the weight of the indicated unit. In this way, the content of a finished container can be updated.

In the invention, the weight of empty container is provided to the supervised assisted system as an input parameter. Also, the weight of the lid of said container can be provided as an input parameter. In this way, the weight of the contents of the container are accurately obtained. Also, the weight is measured each time a new unit is added to the aggregation, so consecutive measurements of the container weight allows for detecting the weight of the last unit aggregated to a container. In the same way, consecutive measurements before and after performing other operations with the aggregation (like disaggregation) allows for tracking weight variations.

In a preferred embodiment of the method of the invention, *the supervised aggregation system is also communicated with a management module by exchanging messages, and wherein the computer means of the supervised aggregation system is configured to:*
- *receive data about the aggregation to be performed from the management module;*
- *for each unit to be aggregated, send to the management module a query to gather the weight of the unit to be added to the container;*
- *for each unit to be aggregated according to the data, wait an input from the user validating that the unit has been added to the container;*
- *check the weight of the container after the unit has been added by means of the scale;*
- *once the number of user inputs reaches the amount of units in the aggregation, send to the management module an acknowledgment confirming all the units of the aggregation*

Advantageously, once the user has aggregated all the required units according to the requirements of the management module (for instance, indicated by an aggregation order provided by said management module), the supervised aggregation system delivers an acknowledgment to the management module.

In a preferred embodiment, the exchanged messages are HL7 messages.

In a preferred embodiment of the method of the invention, *the weight of the unit measured by the scale is compared to a weight measurement for said unit received from the management module.*

In this way, a double check of the weight can be carried out. In this preferred embodiment, the scale is further configured to weight the container upon receipt, from a management module, of a new unit to be added to the aggregation. The scale thus performs a unit-to-unit weighting of the units, in order to improve the traceability of each unit, such that the scale continuously monitor the container and the units stored therein in real time.

In this embodiment, the scale is further configured to weight the container upon receipt of a new unit to be added to the aggregation. Then, the computer means are configured to receive a first measurement of the weight of new storage unit provided by said management system and also configured to compare the first measurement with a second measurement of the new storage unit as measured by the scale.

In even more preferred embodiments, not only the weight is double-checked, but also other information about the storage unit, for instance, the product type, completeness and other informative data related to the unit.

Among the main advantages of the present invention, it is worth to underline the following:

### Advantages from the destination (e.g., a blood bank or donation center) perspective:

- The supervised aggregation system, installed in an origin facility, improves the general traceability and management of units that are sent to a destination, avoiding the distribution of non-certified units (sent without identifying or not sent).
- The supervised aggregation system adds an additional control point to the aggregation process in relation to the time/temperature of the units outside the freezing zone, as well as documented traceability of the aggregation process.
- Through RFID labeling of the aggregations, the effective location of aggregated products is made possible in a comfortable manner while in adverse temperature environments, as well as the agile realization and management of inventories.
- The supervised aggregation system allows personalized management of users and process auditing, which implies an improvement in the traceability of tasks and responsibilities.
- If the destination (blood bank) management module allows the aggregation system to be informed of the units weight, the identification of the units and the amount of units to be shipped is optimized. This action requires the management of unit taring and minimization of frost generation. In this way, the environment (temperature, humidity) of the destination facility wherein the aggregations prepared by using the supervised aggregation system can be adapted to the total weight of the units.

Also, from the units processing in the origin facility wherein the supervised aggregation system of the invention is deployed, several advantages are provided.

### Advantages from the origin perspective

- Recording and using the data about the weight of the units at the source, its management is optimized in all industrial processes.
- The invention allows unit data to be available at the destination management module. In some embodiments, the supervised aggregation system of the invention can be integrated with the management module of the destination to form the supervised aggregation management system.

All the features of the system and/or the steps of the methods described in this specification (including the claims, description, and drawings) can be combined in any combination, except for combinations of such mutually exclusive features.

### DESCRIPTION OF THE DRAWINGS

These and other features and advantages of the invention will be shown more clearly based on the following detailed description of a preferred embodiment, provided solely by way of illustrative and non-limiting example in reference to the attached figures.
- Figure 1: This figure shows an embodiment of the supervised aggregation system according to the present invention.
- Figure 2: This figure shows an embodiment of the supervised aggregation system according to the present invention, connected to a computer management module of the destination of the units and to a user authentication module.
- Figure 3: This figure shows the flowchart of an embodiment of the aggregation operation as performed by the supervised aggregation management system.
- Figure 4: This figure shows the flowchart of an embodiment of the aggregation amendment as performed by the supervised aggregation system.
- Figure 5: This figure summarizes the integration of the supervised aggregation system according to the present invention with a computer management module of the destination to create a supervised aggregation management system. An exchange of messages between said the management module and the supervised aggregation system takes place to check the container content.

### DETAILED DESCRIPTION OF THE INVENTION

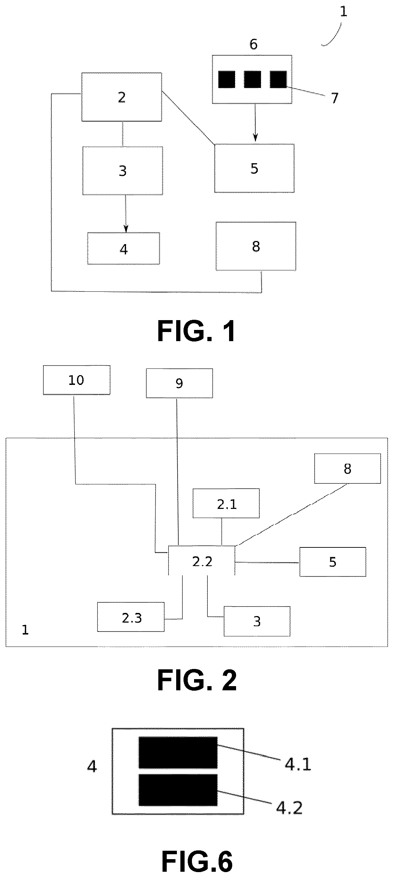

Figure 1 shows an embodiment of a supervised aggregation system (1) (SAS) according to the present invention. Said system (1) comprises the following elements:
- A RFID printer (3), communicated with the computer means (2).
- One or more RFID tags (4), also referred to as RFID labels, which can be printed by using the RFID printer (3). The RFID tags (4) are adapted to be attached to the container (6), thus identifying an aggregation of more units (7) contained therein. To "identify" an aggregation would be understood as indicating a unique reference for said aggregation, and to univocally assign to each aggregation, at least, the following information: number of units (7) of the aggregation and weight of each unit (7) of said aggregation.
- A scale (5), configured for weighting a container (6), with or without storing the units (7). More preferably, the scale (5) is communicated with the computer means (2) and configured to send to the computer means (2) the weight detected for the container (6).
- A reader (8), adapted to read the one or more RFID tags (4) and/or to read unique identifiers of the units (7).

The supervised aggregation system (1) is configured to prepare aggregations of a plurality of units (7) that are housed in a container (6). The units (7) are individually identified by the unique identifiers, for instance, barcodes.

In preferred embodiments, the units (7) are plasma units (7). However, in other embodiments of the invention, the units (7) can be other medical articles, like blood units, blood components, refrigerated medical items or other medicinal products that require to be accurately weighed.

This invention relates to a supervised aggregation system (1) and its software to carry out a supervised and controlled aggregation of the units (7) into a container for their transport to a certain destination installation (for instance, a blood donation center that receives the containers (6) and process them). Advantageously, the invention improves the traceability of the units in containers (6), as well as it allows remote control, counting, and location of the units.

More specifically, the invention faces the problem of distributing non-certified units by mistake, as well as avoiding any problem caused by the lack of traceability of the product. Through the use of RFID technology, the effective location of aggregated products is made possible in a comfortable manner while in adverse temperature environments.

In the particular case of units, the product is distributed in a refrigerated state. Thus, the reading of said units must be performed in frozen atmosphere, which may hinder the reading based on optical methods like conventional barcodes. This is why the present invention combines redundant identification methods, as it will be discussed later.

The supervised aggregation system (1) guides a human operator in the steps to be performed when it comes to arrange an aggregation. This system (1) is also configured to communicate with a computer management module (10) of the destination to verify the content of the aggregations, once received in said destination. The computer management module (10) can be communicated with the supervised aggregation system (1) to exchange information about the units (7) or containers (6) that are sent from the origin to the destination.

Figure 2 illustrates how the supervised aggregation system (1) of the invention can be connected to other external devices, for instance, a user authentication module (9) and a computer management module (10) of the destination (e.g., a donation center). In this case, the user authentication module (9) comprises a Lightweight Directory Access Protocol (LDAP) server, configured to authenticate operators/users in the supervised aggregation system (1). The user authentication module (9) is connected to the computer means (2), particularly to a processor (2.2).

Figure 2 also provides more details about the computer means (2), which in turn comprises:
- a (touch)screen or equivalent graphical means (2.1); which are configured to display a user interface for an operator which uses the supervised aggregation system (1);
- a processor (2.2), which in turn comprises an embedded web server (like Tomcat); and
- a database (2.3) configured to store the information about the aggregations and the users that prepare them as well as all involved operations. The database (2.3) is connected to the processor (2.2) and it is configured to store all operations carried out by a user by means of the touchscreen (2.1), for instance, adding a new aggregation or correcting a former one. For instance, the database (2.3) can be PostgreSQL, and it is communicated with the processor (2.2) (Tomcat server) following a client-server architecture by using Java Database Connectivity (JDBC).

Both the scale (5) and the reader (8) are connected to the computer means (2), particularly to the processor (2.2) (by cable means or wirelessly), such that the weight of the container (6) or the barcodes of the units (7) contained therein are updated and reported to the database (2.3). The barcode reader (8) is connected to the processor (2.2) by a serial connection. Then, the information about the operation carried out by the user is shown via the touchscreen (2.1).

By means of a screen or touchscreen (2.1) of the computer means (2), the operator who prepares the container shipment is guided in the execution of actions to add units (7) to a container (6).

The processor (2.2) is also connected to the printer (3), for instance, by means of Windows Printer Service.

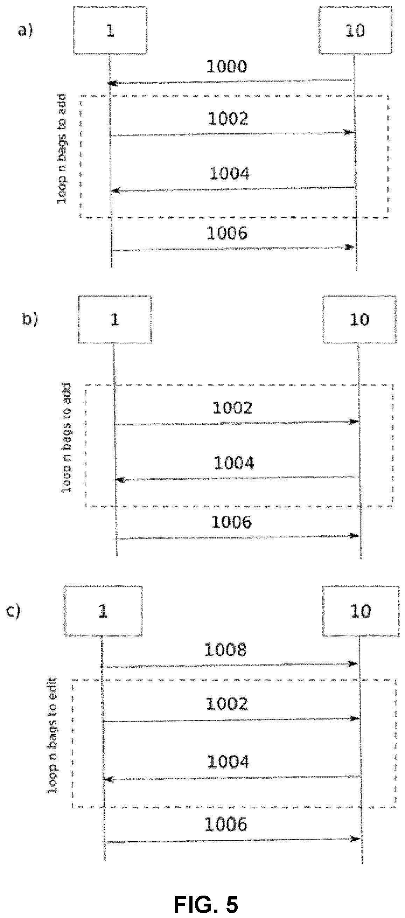

The supervised aggregation system (10) makes it possible to aggregate units (7) to containers based on a scheduling that the computer management module (10) of the donation center informs the supervised aggregation module (10). It is also possible to carry out aggregations without a specific schedule, initiated by an operator/user (see Figure 5 later).

In a preferred embodiment (illustrated in Figure 6), the RFID tag (4) comprises an optically identifiable field (4.1), e.g., like a barcode, a QR, an alphanumeric sequence or the like) and a RFID based field (4.2).

In a preferred embodiment, the supervised aggregation system (1) encodes and prints an RFID tag (4) for the identification of the aggregation which is attached to the container (6). This RFID tag (4) is encoded by three complementary tagging alternatives:
1. GS1 DataMatrix code with the identification of each aggregated unit in the container (6). GS1 Datamatrix is a bidimensional code.
2. A Serial Shipping Container Code (SSCC), GS1 128 aggregation barcode.
3. A GS1 tag encoding the SSCC, in hexadecimal format.

Options 2 and 3 above are optically identifiable fields (4.1), while option 1 is the RFID identifier of the RFID based field (4.2) which provides reading capability poor visibility or adverse environments.

The use of redundant identifiers to identify an aggregation provides the supervised aggregation system (1) of the present invention with high reliability. The RFID tag is particularly advantageous to ease the reading in adverse atmospheres.

The use of RFID coding as a complement to barcodes and DataMatrix in supervised barcodes and DataMatrix in supervised aggregation, offers operational advantages in operational benefits of checking, counting and locating items.

The RFID encoding is generated by the RFID printer (3) at the same time as the barcode printout is barcode and DataMatrix is generated by the printer at the same time as the barcode is printout. Once the RFID label/tag is affixed to the container, it allows the aggregation to be identified in environments where optical reading is difficult (e.g., environments with reduced visibility, humidity or frost).

The encoding generated by the supervised aggregation system (1) allows for the identification of multiple containers or pallets by handheld or RFID gantries installed in the destination facility. Said gantries can be controlled by the computer management module (10) of the destination.

The supervised aggregation system (1) may include additional readers that allow the maintenance of inventories in the source/origin installation where the supervised aggregation system (1) is installed. Once the aggregations have been made and added to a pallet, they are sent to their final destination. When received at destination, they are thus read *en* masse, for instance, in a gantry.

Checking, counting and stock traceability operations are facilitated by the invention. Just by reading the external RFID tag (4) of the container (6) with the barcode or RFID reader (8) it is possible to have traceability of all the units contained in it.

The general operation for creating an aggregation by using the supervised aggregation system (1) of the invention is as follows. Once logged in by using the user authentication module (9), an user must choose or create an aggregation indicating a name for the order, a number of units (7), and other necessary data (product type, etc.). The first step is to place a container (6) (v.gr. a cardboard box) on the scale (5), automatically weighting it. Once it is confirmed that the container (6) is empty and without its lid, the user is asked to scan a unit (7) using the barcode reader (8). Once a barcode of the unit (7) is read and its validity confirmed by computer means (2) of the invention, the supervised aggregation system (1) asks the user to insert the unit (7) into the container (6), and the weight of the container is updated. This weight is compared with what the center's donation system originally has listed and if it is not correct, a notice is generated; if it is correct, the process continues. In other words, the supervised aggregation system (1) compares the weight detected with the scale (5) for a certain unit and the weight of the same unit according to the management module (10).

If reading the barcode of a certain unit (7) is not possible due to frost on the barcode, the supervised aggregation system (1) comprises a cleaning device, particularly a sponge, to remove the frost. Once all the units (7) have been added to a container (6) and the aggregation is finished, the supervised aggregation system (1) requests the user the following operations: closing of the container (6), printing a RFID tag (4) identifying the units (7) of the aggregation, attaching said tag (4) to the container (6), and finally, checking the aggregation RFID tag (4) (for instance, verifying the state of the tag and in the event of being damaged, reprinting it; and it is also possible to read the RFID tag (4) to verify that the data contained therein are correct). The RFID tag (4) comprises an aggregation identification barcode (SSCC), a Datamatrix code containing the data of all aggregated units (7) in a container (6), and an RFID tag (4) encoded with the aggregation data (number of units (7), identifiers of said units (7), etc.). The scale (5) continuously monitors the weight during the process of aggregation, detecting anomalies if a unit is inserted or removed without system (1) control or without sticking to the protocol indicated, which will be discussed later.

The system (1) allows operations of disaggregation, aborts, and termination of processes prior to their conclusion. In all these operations, the scale (5) also monitors the weight and an unexpected variation of the weight may trigger different warning and error messages to alert the user/operator. In this way, the supervised aggregation system (1) is suitable for taking into account possible operator mistakes during manipulation of the units (7), or when some of the units (7) are not appropriate for the aggregation (e.g., due to an inappropriate weight or an inadequate preservation, etc.) and must be discarded prior to their delivery to the final destination.

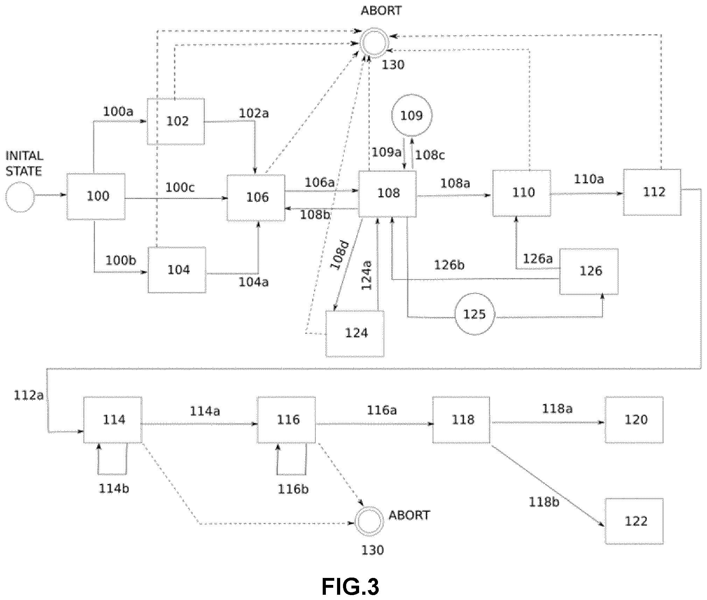

Detailed examples of the operation with the supervised aggregation system (1) of the present invention are shown in Figures 3-5.

In Figures 3-4, each state of the system (1) is represented by a number (v.gr, 200, 202, etc.) while the events/transitions (e.g., actions of the user or weight variations detected by the scale (5)) that may change the state of the system (1) are indicated by a number followed by a character (v.gr, 200a, 200b, etc.). During all the system (1) states, the scale (5) continuously tracks the weight of the container (6) and the transitions (also referred to as events) to new states of the system (1) are automatic when they depend on a weight variation. Particularly, the weight of the container (6) and the lid of said container are inputted as parameters, so the system (1) is able to detect when the lid has been removed from the container (6) and when the container (6) is closed with the lid. Advantageously, the invention allows control of the units (7) by weight traceability.

Figure 3 provides a detailed flowchart of the different states of the system (1), and explains how the system (1) changes its state triggered by different events of the user or weight variations. The state of the system comprises particular screens displayed by the computer means (2) which allows a user/operator to interact with the system (1), for instance, for introducing aggregation orders or for validating barcodes of the units (7) or the RFID tag (4) of the container (6) storing the units (7). In this case, let us assume that the operator wishes to prepare an aggregation by using the supervised aggregation system (10). In this case, the operation is conducted as follows, from an initial state of the system (1):
- 100: The touchscreen (2.1) of the system (1) displays an "initializing scale" screen. Starting from state 100, the system may evolve differently depending on external events:
   ∘ If the system (1) detects (100a) a container with a lid onto the scale (5), the system evolves to state 102. For instance, the system (1) may have received input parameters about the weight (like the weight of a container with and without the lid, etc.), along with a weight margin error in case there is a mismatch between the weight measured by the scale (5) and the expected weight.
   ∘ If an unexpected weight variation is detected (100b) by the scale (5), the system is guided to state 104.
   ∘ If the user verifies (100c) that the scale (5) is empty, said user inputs said information through the touchscreen (2.1) and the system evolves to state 106.
- 102: The touchscreen (2.1) of the system (1) displays a "remove the lid of the container" screen. Once the user removes (102a) the lid of the container (6), the system (1) reaches state 104.
- 104: The system (1) remains in this state until the unexpected weight variation is modified such that the scale (5) detects an expected weight, or until the user triggers an abort (130) operation. Once the user removes (104a) the unexpected weight that has been detected (e.g., a last unit (7) has been added to the container (6) without following the flow of operation) and the scale (5) detects that the weight is correct, the system evolves to state 106.
- 106: In this state, the touchscreen (2.1) displays a "tare the container (6)" screen. In this way, the container (6) weight is considered such that the scale (5) is able to provide an accurate measurement of the units (7) contained therein. Afterwards, the system (1) reaches state 108.
- 108: In this state, the touchscreen (2.1) displays a "unit identification" screen, which allows the user to interact with the system (1) sequentially providing (108a) and identifying all the units (7) to be included in the aggregation. To identify a unit (7), the operator uses the reader (8) to scan it. This user may have a predetermined aggregation order containing the units (7) to be aggregated, or may receive (109a) this aggregation order from a management module (10) of the destination (in other words, from an external device). If the information about the aggregation order is received from the destination, event 109a comprises iteratively indicating to the system (1) which is the next unit (7) to place in the container (6); and once the user does so, the system (1) acknowledges (108c) the introduction of the unit (7) in the container (6). Notice that if during units (7) aggregation the system detects a large variation of the weight.
- 109: Next unit (7) identification. A management module (10) provides the system (1) with the next unit (7) to be included in the aggregation. The exchange of information between the management module (10) and the system (1) via events 108a and 109b provides an additional weight control (double check).
- 110: Once all units (7) have been provided and identified (108a), the system (1) reaches state 110, wherein the touchscreen (2.1) displays a "place the container lid" screen, to close said container. The user places the lid (110a) and the system evolves to state 112.
- 112: The touchscreen (2.1) shows a "print the container label" screen. By interacting with this screen, the user configures the print of a new RFID label/tag (4) for the container (6) which identifies the unit (7) aggregation contained therein.
- 114: The touchscreen (2.1) shows a "attach to the container (6) the RFID label (4)" screen. When the system (1) is in this screen, the user is allowed to verify the quality of the tag (4) and, in case that it is not appropriate, the user may input a reprinting (114b) request to the system (1) to obtain a new RFID tag (4), which must be attached again to the container (6) after removing the former one. Once the correct tag (4) is obtained, or in the event of the tag (4) being correct from the beginning (114a), the user attaches it to the container (6) and the system (1) evolves to state 116.
- 116: The touchscreen (2.1) shows a "verify the container tag" screen, wherein the user uses the reader (8) to test the reading of the RFID tag (4). If the RFID tag is read successfully (116a), the system (1) evolves to state 118; otherwise, the RFID tag (4) is read again (116b).
- 118: The touchscreen (2.1) shows a "finish the aggregation order" screen, wherein the user inputs whether he/she wishes to finish all aggregations (118b) or to finish the current aggregation (118a) and to continue with a new one.
- 120: Following event 118a, the system (1) is notified by the user of the finish of the current aggregation, but the need of inputting a new aggregation, thus the system (1) returns to the initial state and the touchscreen (2.1) shows "aggregation order list" screen again.
- 122: Following event 118b, the system (1) is notified by the user of the finish of all pending aggregations, thus the system (1) returns to the initial state and the touchscreen (2.1) shows the "aggregation order list" screen again.
- 124: In this state, the touchscreen (2.1) shows a "disaggregate unit" screen, which allows the user to interact to the system to undo a unit (7) aggregation. This state can be reached from state 108, when the user launches a disaggregation request (108d) to the system (1). In state 124, the system (1) allows the user to indicate which unit (7) is removed from aggregation (for instance, indicating its unique identifier). Once the disaggregation is done (124a), which is automatically verified by the system (1) detecting the weight variation, the system (1) turns back to state 108.
- 125: "Remove last unit screen", wherein the management module (10) requests the system (1) to remove last unit (7) added to the container.
- 126: The touchscreen (2.1) displays a "Retire the last identified unit" screen. This state is reached upon request of the management module (10), from state 125. Depending on the events carried out by the user, several courses of action are possible:
   ∘ The user may continue (126a) removing last unit (7), which guides the system (1) to state 110 again.
   ∘ The user may continue (126b) without removing last unit(7), which guides the system (1) state 108 again.
- 130: Abort state. All the information about the abort (130) is stored in the database (2.3), including the progress of the operation until the abortion takes place, as well as tracking the user who has performed said operation. After abort operation, then system (1) turns back to the initial state.

States 109 and 125 corresponds to the management module (10) deployed in the destination, which interacts with the supervised aggregated system (1) of the present invention. As events 109 and 125 are not states of the system (1), but states of the management module (10). For this reason, they are surrounded by a round shape.

In this way, the supervised aggregation system (1) can be integrated with the software of the destination and both the database (2.3) of the system (1) and the management module (10) are updated simultaneously during the operation (aggregation, disaggregation, etc.) with the system (1). This integration forms the so-called supervised aggregation management system, according to the second inventive aspect.

It is worth to underline that the dashed lines in Figures 3-4 represent transitions wherein the system (1) is interrupted, or the user wishes to stop the operation (aggregation, disaggregation) without following the flow. In those cases, the system (1) is guided to an abort (130) state wherein information is registered by the computer means (2) to track the operation, and after that, it returns to an initial state. The abort (130) can be reached from many other states, depending on the point of the execution that the user interrupts.

Although not detailed, it is implicit in the present disclosure that the computer means (2) of the system (1) is responsible for keeping updated the database (2.3) and, optionally, the management module (10) in the destination taking into account the current state of the system (1) as well as the operations performed with the same.

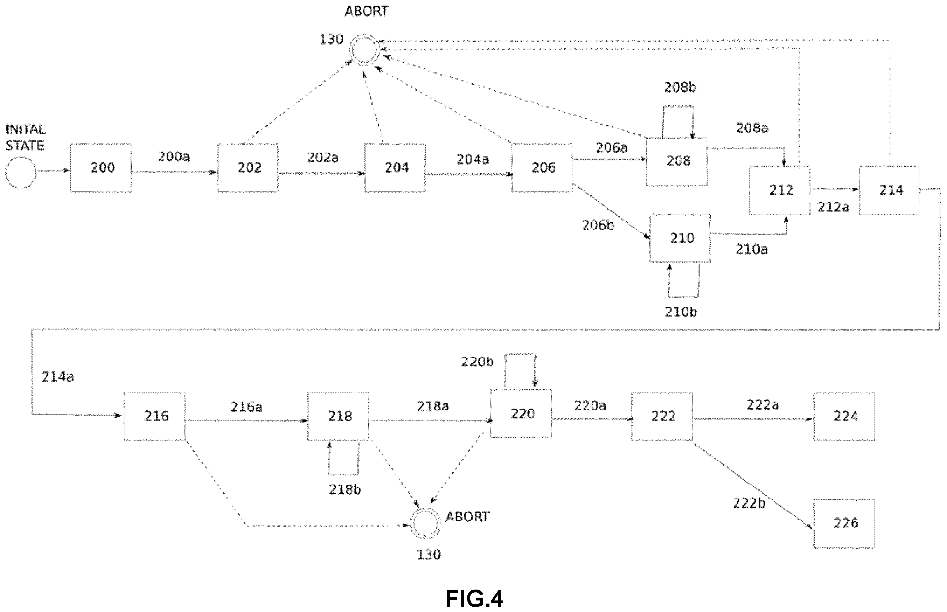

Figure 4 summarizes the flow of the supervised aggregation system (1) when an aggregation is changed or amended. In this case, let us assume that an aggregation order is received from the management module (10) of the destination.
- 200: The touchscreen (2.1) of the computer means (2) shows an "aggregation order list" screen.
- 200a: The user interacts with the "aggregation order list" screen, which allows the user to indicate the amount of units (7) of the aggregation and other necessary data (product type, etc.) until it inputs all the information about the units (7) to be included in an aggregation in the container (6).
- 202: The touchscreen (2.1) shows a "place the container (6)" screen.
- 202a: The user places the container (6) onto the scale (5) of the supervised aggregation system (1).
- 204: The touchscreen (2.1) shows a "remove the lid of the container (6)" screen.
- 204a: The user removes said lid, order to add (aggregate) or to remove (disaggregate) units (7).
- 206: The touchscreen (2.1) shows a "change/amend the container (6) units (7)" screen.
- 206a and 206b: Interacting with the touchscreen (2.1), the user indicates that he/she is aggregating (206a) units (7) to the container (6) or that he/she is disaggregating (206b) units. In both cases, the user adds or removes units (7) from the container (6), and the scale (5) monitors the process.
- 208: After aggregating (206a) operation, the system (1) reaches state 208, wherein the touchscreen (2.1) shows a "unit identification" screen, wherein the system (1) continues for each unit read (208b), until the user finishes (208a) the aggregation of all the units (7). Each unit (7) that is added to the aggregation is read by using the reader (8).
- 210: After disaggregating (206b) operation, the system (1) reaches state 210, wherein the touchscreen (2.1) shows a "disaggregate unit" screen, wherein the system (1) continues for each unit read (210b), until the user finishes (210a) the disaggregation of the units (7). Each unit (7) that is removed from the aggregation is read by using the reader (8).
- 212: Once the operation of states 208 or 210 is finished, the system (1) reaches state 212, wherein the touchscreen (2.1) shows a "place the container lid" screen, to close it.
- 212a: The user places the lid and closes the container (6). As aforementioned, the system (1) comprises the weight of the lid as an internal parameter.
- 214: The touchscreen (2.1) displays a "remove current container RFID label" screen to guide the user in this operation. When the user wishes to change the content of the container (6), the former RFID label must be replaced by a new one, taking into account the updated units (7) contained in the container (6).
- 214a: The user removes the former RFID label (4) of the container (6).
- 216: The touchscreen (2.1) shows a "print the container label" screen. By interacting with this screen, the user configures the print of a new RFID label/tag (4).
- 216a: The RFID printer (3) of the system (1) prints the new RFID label (4) and the user attaches it to the container (6).
- 218: The touchscreen (2.1) shows a "attach to the container (6) the RFID label (4)" screen. When the system (1) is in this screen, the user is allowed to verify the quality of the tag (4) and, in case that it is not appropriate, the user may input a reprinting (218b) request to the system (1) to obtain a new tag (4), which must be attached again to the container (6) after removing the former one. Once the correct tag (4) is obtained, or in the event of the tag (4) being correct from the beginning (218a), the user attaches it to the container (6) and the system (1) reaches state 220.
- 220: The touchscreen (2.1) shows a "verify the container tag" screen, wherein the user uses the reader (8) to test the reading of the RFID tag (4). If the RFID tag is read successfully (220a), the system (1) evolves to state 222; otherwise, the RFID tag (4) is read again (220b).
- 222: The touchscreen (2.1) shows a "finish the aggregation order" screen, wherein the user inputs whether he/she wishes to finish all aggregations (222b) or to finish the current aggregation (222a) and to continue with a new one.
- 224: Following event 222a, the system (1) is notified by the user of the finish of the current aggregation, but the need of inputting a new aggregation, thus the system (1) returns to the initial state and the touchscreen (2.1) shows "aggregation order list" screen again.
- 226: Following event 222b, the system (1) is notified by the user of the finish of all pending aggregations, thus the system (1) returns to the initial state and the touchscreen (2.1) shows the "aggregation order list" screen again.

Figure 5 illustrates the supervised aggregation management system according to the third inventive aspect, which comprises the supervised aggregation system (1) and the management module (10). Particularly, it is described the exchange of messages between the supervised aggregation system (1), which is placed at an origin installation, and the management module (10) which is placed at the destination.

Figure 5a shows the exchange of messages when the supervised aggregation system (1) is applied to prepare an aggregation:
- 1000: The management module (10) initiates an aggregation order, indicating the number of units (7) to add in an aggregation, a product type and additional comments (when required).
- Optionally, and for each unit to be added in the aggregation, the following exchange of messages may occur between the aggregation system (1) and the management module (10), if an additional unit (7) check with the destination is desired:
   ∘ 1002: The system (1) launches a query of the unit (7), requesting a unit identifier (e.g., barcode) to the management module (10).
   ∘ 1004: The management module (10) replies to the message (1002) by confirming the unit (7) details (identifier, weight in milligrams, product type, completeness, and whether the product type corresponds to a certain container (6) or not). The information of the "completeness" is related to the unit (7) validation in experimental tests or internal checks carried out in the destination. In this way, it is verified whether the unit (7) corresponds to the one indicated in the container (6) or not. Also, the weight of the unit (7) is checked again in the management module (10) in order to ascertain that the weight of the unit (7) in the origin coincides with the weight of the unit (7) received in the destination. In this weight comparison, a certain margin error can be considered in the precision scale (5).
- 1006: The supervised aggregation system (1) acknowledges the container (6) preparation, with the units (7) aggregation according to the initial message (1000), which in turn comprises information about a unique identifier for the container (6) and the units (7) contained therein, the total amount of units (7) included in the aggregation, and additional comments.

As displayed in Figure 5a, in an embodiment of the invention, the communication between the origin and the destination take place by means of Health Level 7 (HL7) messages (1000, 1002, 1004, 1006). In this way, the supervised aggregation system (1) can be integrated with the management module (10) and they carry out a synchronous integration of checks for the contents of the container (6), for instance, the weight control of each unit (7) in the aggregation.

Figure 5b follows a similar approach to Figure 5a, but the aggregation order is not received from the management module (10). In Figure 5b, the aggregation is initiated by a user/operator of the supervised aggregation system (1). In that case, the system (1) and the management module (10) exchange, for each unit (7) to be added in the aggregation, a pair of HL7 messages (1002, 1004) as in Figure 5a. Once all the units (7) of the aggregation are indicated, a message (1006) is sent to the management module (10). The message of aggregation preparation (1006) comprises information about the unit (7) identifier, weight, completeness and product type, such that the supervised aggregation system (1) acknowledges the container (6) preparation.

Finally, Figure 5c corresponds to a unit (7) amendment or correction process, triggered by the addition of the removal of a unit (7) without following the flow of the conventional operation indicated by the system (1). In this way, the system (1) allows operations of disaggregation (for instance, when the user gets the unit mixed up when placing it in the container (6)), aborts, and termination of processes prior to their conclusion. In the particular case of Figure 5c, the operator of the system (1) wishes to change the content of the container (6), by adding or removing a unit (7). In this case, as the system (1) is automatically triggered by the unexpected variation of weight, the procedure is as follows:
- Adding or removing (1008) a unit (7);
- Optionally, and for each unit to be either added or removed in the aggregation, exchanging HL7 messages (1002, 1004). These messages (1002, 1004) are optional because in some embodiments of the invention, it is not required the verification of the units (7) weight by the destination.

## Claims

1. A supervised aggregation system (1), suitable for assisting a user when creating an aggregation of units (7) and storing said aggregation in a container (6), the system (1) comprising:
- a computer means (2);
- at least one reader (8) communicated with the computer means (2), the reader (8) being configured to read one or more RFID tags (4) and/or to read unique identifiers of the units (7);
- a scale (5) communicated with the computer means (2) and configured to continuously weighting the container (6);
- a RFID printer (3) communicated with the computer means (2); the RFID printer (3) being configured to encode and to print the one or more RFID tags (4), the one or more RFID tags (4) comprising data to identify the container (6) upon request of the computer means (2); the RFID tags (4) being adapted to be attached to the container (6);
and wherein the computer means (2) are configured for validating the aggregation of the unit (7) by monitoring the weight of the container (6) after adding each unit (7).

2. The supervised aggregation system (1) according to the preceding claim, wherein the RFID tags (4) are configured to operate in UHF band.

3. The supervised aggregation system (1) according to any of the preceding claims, wherein the computer means (2) is configured to exchange messages, preferably HL7 messages, with a computer management module (10) to verify the units (7) of the aggregation.

4. The supervised aggregation system (1) according to any of the preceding claims, wherein each of the units (7) of a container (6) is identified by a unique identifier, the unique identifier preferably being a barcode, and wherein said unique identifier being readable by the reader (8).

5. The supervised aggregation system (1) according to the preceding claim, wherein the reader (8) is configured to read the unique identified and RFID tags.

6. The supervised aggregation system (1) according to any of the preceding claims, wherein the data of the RFID tag (4) comprises, at least:
- an optically identifiable field (4.1); and
- a radiofrequency-based field (4.2).

7. The supervised aggregation system (1) according to the preceding claim, wherein the optically identifiable field (4.1) of the RFID tag (4) comprises:
- a GS1 128 aggregation barcode, which is configured as a serial Shipping Container Code, SSCC; and.
- a GS1 tag encoding the SSCC in hexadecimal format.

8. The supervised aggregation system (1) according to claims 6 or 7, wherein the radiofrequency-based field (4.2) comprises a GS1 DataMatrix code with an identification of each aggregated unit (7).

9. The supervised aggregation system (1) according to any of the preceding claims, wherein the RFID tag (4) encoded and printed by the RFID printer (3) is configured as a temperature sensor.

10. The assisted aggregation system (1) according to any of the preceding claims, wherein the computer means (2) is configured for:
- receiving data about the aggregation to be performed from a management module (10);
- sending to the management module (10) a query to gather the weight of the unit (7) to be added to the container (6);
- for each unit (7) to be aggregated according to the data, waiting an input from the user validating that the unit (7) has been added to the container (6);
- checking the weight of the container (6) after the unit (7) has been added by means of the scale (5) and compare said weight of the container (6) with a previous weight gathered from the management system (10);
- once the number of user inputs reaches the amount of units (7) in the aggregation, sending to the management module (10) an acknowledgment confirming all the sunits (7) of the aggregation.

11. A supervised aggregation management system comprising:
- the supervised aggregation system (1) according to any of the preceding claims; and
- a management module (10);
wherein the supervised aggregation system (1) and the management module (10) are communicably coupled to exchange messages, preferably HL7 messages.

12. A method for creating an aggregation of units (7) in a container (6) by assisting a user with the supervised aggregation system (1) according to any of the preceding claims, the method comprising the following steps:
- inputting in the supervised aggregation system (1), by means of the computer means (2), data about the aggregation to be performed; said data comprising the amount of units (7) for the aggregation;
- placing an empty container (6) onto the scale (5) and performing taring of said container (6);
- requesting the user to proceed with the aggregation, and for each unit (7) to be added to the container (6):
∘ reading a unique identifier of the unit (7) with the reader (8);
∘ requesting the user to add the unit (7) in the container (6);
∘ validating the aggregation of the unit (7) by monitoring the weight of the container (6) after adding the unit (7);
- once all the units (7) to be aggregated are added to the container (6), requesting the user to finish the aggregation by:
∘ closing the container (6) with a lid,
∘ encoding and printing a RFID tag (4) which identifies the aggregation by using the RFID printer (3), and
∘ attaching the RFID tag (4) to the container (6).

13. Method according to the preceding claim, wherein the computer means (2) is further configured to allow disaggregation and/or aggregation of units (7) from the container (6), and wherein the computer means (2) is configured to request the user which unit(s) are to be disaggregated and/or aggregated, and to monitor the disaggregation and/or aggregation of s units (7) by means of weight variation measured by the scale (5).

14. Method according to any of the preceding claims 12 or 13, wherein the supervised aggregation system (1) is also communicated with a management module (10) by exchanging messages, preferably HL7 messages;
and wherein the computer means (2) of the supervised aggregation system (1) is configured to:
- receive data about the aggregation to be performed from the management module (10);
- for each unit (7) to be aggregated, send to the management module (10) a query to gather the weight of the unit (7) to be added to the container (6);
- for each unit (7) to be aggregated according to the data, wait an input from the user validating that the unit (7) has been added to the container (6);
- check the weight of the container (6) after the unit (7) has been added by means of the scale (5);
- once the number of user inputs reaches the amount of units (7) in the aggregation, send to the management module (10) an acknowledgment confirming all the units (7) of the aggregation.

15. Method according to the preceding claim, wherein the weight of the unit (7) measured by the scale (5) is compared to a weight measurement for said unit (7) received from management module (10).
